# EUROPEAN PATENT APPLICATION

(11) **EP 1 837 109 A1**
(43) Date of publication of application: **26.09.2007**
(21) Application number: 07104024.0
(22) Date of filing: 13.03.2007
(51) Int. Cl.: B23D 47/02, B27B 5/29, B23D 45/04

(54) **Fine-adjust miter mechanism for a miter saw**

(30) Priority: 20.03.2006 US 784010 P
(71) Applicant: Black & Decker, Inc., Newark, DE 19711 (US)
(72) Inventor: Wikle, David L, York, PA 17403-9613 (US); Meredith, Daryl S, York, PA 17402 (US); Lambert, Torrey R, Baltimore, MD 21224 (US)
(74) Representative: Bell, Ian Stephen

(57) **Abstract**

A miter saw (10) has a base assembly, a table assembly assembly rotatably attached to the base assembly (12), and a drive assembly (36) pivotally attached to the table assembly. The drive assembly has a motor (22) and a blade (18) driven by the motor. The table assembly has at least one elastic bumper (73) thereon.

## Description

This specification relates to miter saws and more specifically to fine-adjust miter mechanisms for such miter saws.

A miter saw typically has the capacity to crosscut work pieces placed against its horizontal table and vertical fence. This saw can be rotated to make vertical cuts through a work piece at various angles relative to the fence. A vertical cut is known as a "miter cut."

A compound miter saw has the capability to tilt the blade (counterclockwise) to an angle relative to the table, generally from 0 degrees to 45 degrees left of vertical. A cut made with the blade tilted at an angle (and perpendicular to the fence) is known as a "bevel cut." A cut made with the blade set to both an angle relative to the fence (miter angle) and an angle relative to the base (bevel angle) is known as a "compound cut."

A dual bevel compound miter saw has the added capacity to tilt the blade to an angle relative to the table generally from 45 degrees left of vertical to 45 degrees right of vertical. This arrangement allows for more "compound cut" variations.

A slide miter saw has the saw component mounted to a rail system allowing it to slide backward and forward thereby increasing the saw's cutting capacities. The slide mechanisms are typically added to a compound saw.

Miter saws typically include a detent system that allows the table and the attached cutting tool to be preset to specific angles relative to the fixed fence. A detent system provides an accurate means to preset and reset the saw to make the most popular cuts. A miter saw typically provides 10 to 12 preset detent positions or recesses.

The typical miter saw table includes a rotating disc-like work surface that is supported by the tools' base. The table includes a support member for a lock handle in the front and a saw mounting area to the rear, behind the fence. In addition, a spring-loaded retractable detent pin or wedge is mounted in the handle area. The base typically has a rounded front shape that is concentric with its table and includes detent holes or slots positioned to accept the above-mentioned pin or wedge. The locking handle moves to create pressure against the rounded front of the base outside of the detent slot or hole locations. The lock handle may be of a rotating screw-type or lever cam-type design. In order to indicate the saw's preset cutting position, the rotating table supports a pointer that relates to an angle scale on the fixed base.

In using a detent system to preset the miter cut angle, the user would first loosen the lock handle, and retract the detent pin or insert. This would be followed by rotating the table, releasing the detent pin or insert into a desired slot or recess, and relocking the handle.

If a user wants to preset the miter saw for an angle cut not provided by the detent system, he would allow the spring-loaded pin or insert to rest against the front surface of the base outside of the detent slots and tighten the locking handle. For these cuts, the user must use the locking handle to hold the saw's position. Due to the interaction between the lever and the detent, however, the prior art arrangements do not allow for a fine adjustment that is near one of the predetermined detent positions.

It is thus desirable to provide a miter saw with a fine-adjustment mechanism whereby the user can quickly and easily make slight adjustments to the angle of cut. Several solutions have been attempted, as shown in US Patent Published Application Nos. 20040154448 and 20050262984. However, such solutions require many parts, which add cost to the miter saw, as well as increase the assembly time.

A miter saw including a base assembly, a table assembly rotatably attached to the base assembly, a drive assembly pivotally attached to the table assembly, the drive assembly including a motor and a blade driven by the motor, where the table assembly has at least one elastic bumper thereon.

Additional features and benefits of the present invention are described, and will be apparent from, the accompanying drawings and the detailed description below.

The accompanying drawings illustrate preferred embodiments according to the practical application of the principles thereof, and in which:
FIG. 1 is an exemplary sliding miter saw incorporating the invention.
FIG. 2 is a partial cross-section of the miter detent override mechanism.
FIG. 3 is a partial top plan view of a first embodiment of a miter fine-adjust mechanism according to the invention.
FIG. 4 is a partial cross-sectional view of a second embodiment of a miter fine-adjust mechanism according to the invention.

The present invention will now be described more fully hereinafter. This invention may, however, be embodied in many different forms and should not be construed as limited to the embodiments set forth herein; rather, these embodiments are provided so that this disclosure will be thorough and complete, and will fully convey the scope of the invention to those skilled in the art.

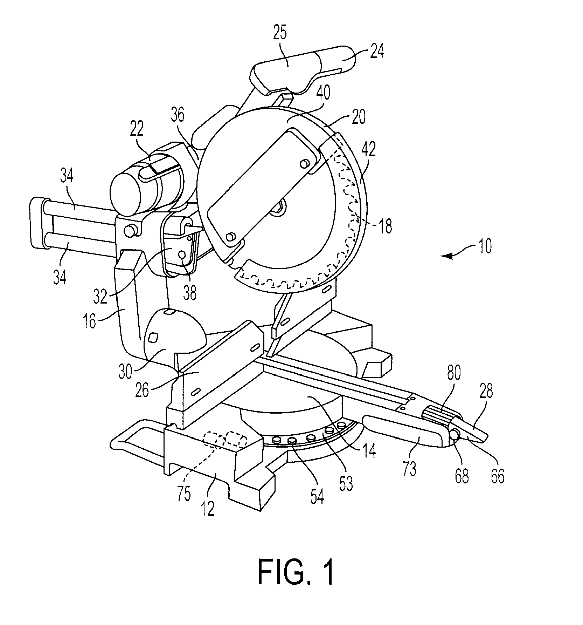

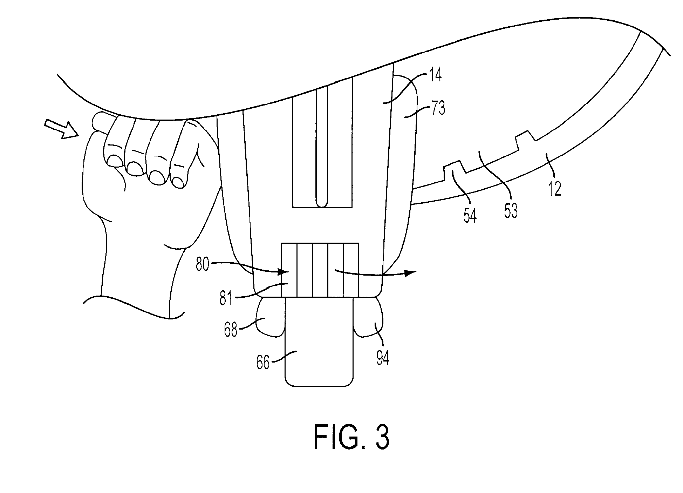

In FIGS. 1 through 4, an exemplary sliding compound miter saw according to the present invention is designated generally by the reference numeral 10. The sliding compound miter saw 10 preferably includes a base assembly 12, an angularly movable turntable or table assembly 14, an angularly movable housing assembly 16, a saw blade 18, a blade guard mechanism or assembly 20, a motor 22 drivingly connected to the saw blade 18 by way of a drive assembly 36, a handle arrangement 24, and a workpiece-supporting fence assembly 26.

The table assembly 14 is preferably secured to the base assembly 12 such that it can be rotated in order to provide adjustment for miter cutting of a workpiece. The rotation of the table assembly 14 changes the angle of saw blade 18 relative to the fence assembly 26 but maintains the perpendicularity of the plane of the saw blade 18 with the table assembly 14. A locking mechanism 28 can be activated in order to lock the table assembly 14 to the base assembly 12 at a desired miter-cutting position.

The housing assembly 16 may be secured to the table assembly 14 such that it can be pivoted with respect to the table assembly in order to provide adjustment for bevel cutting of the workpiece 13. The bevel pivoting of the housing assembly 16 changes the angle of the saw blade 18 relative to the table assembly 14 but maintains the perpendicularity of the saw blade 18 with respect to the fence assembly 26. A locking mechanism 30 can be activated in order to lock the housing assembly 16 to table assembly 14 at a desired bevel-cutting position. As can be appreciated by one skilled in the art, the adjustments for mitering and beveling can be performed separately or simultaneously in order to perform a compound miter and bevel cut.

The housing assembly 16 may also include a support housing or assembly 32, which mounts a pair of support arms 34 for sliding movement with respect to the remainder of the housing assembly 16. The saw blade 18, the blade guard 20, the motor 22 and the handle 24 are all preferably mounted to a drive assembly 36, which is pivotally interconnected with the support arms 34 and thus the support assembly 32. The pivoting of the drive assembly 36 downwardly towards the table assembly 14 operates to bring the saw blade 18 into a workpiece-engaging position and simultaneously open the blade guard 20 in order to cut a workpiece which is supported by the table assembly and the fence assembly 26. The sliding movement of the support arms 34 relative to the housing 16 permits the drive assembly 36 and thus the saw blade 18 to be pulled or pushed through the workpiece.

The blade guard assembly 20 preferably includes a fixed upper blade guard 40 and a movable lower blade guard 42. The movable guard 42 is interconnected for pivotal movement between a "closed" position, wherein the movable guard 42 covers a maximum portion of the cutting periphery of the blade 18, and an "open" position covering a minimum portion of the cutting periphery of the blade 18 in order to allow the blade 18 to perform cutting operations on the workpiece 13 and to allow for blade removal or replacement. Persons skilled in the art are referred to US Patent No. 6,182,548, which is hereby fully incorporated by reference, for more information on an exemplary blade guard assembly 20.

Referring to FIGS. 1-3, locking mechanism 28 preferably comprises a miter locking mechanism 66 and a miter detent override mechanism 68. Persons skilled in the art are referred to US Patent No. 6,810,780, which is hereby fully incorporated herein by reference, for further information on an exemplary miter locking mechanism 66. Preferably, miter locking mechanism 66 has a handle 72 which may be activated by the user to lock the table assembly 14 in the desired miter angle.

Miter detent override mechanism 68 preferably comprises a detent spring 92 and a detent override lever 94. Persons skilled in the art are referred to US Patent No. 6,810,780, which is hereby fully incorporated herein by reference, for further information on an exemplary miter detent override mechanism 68.

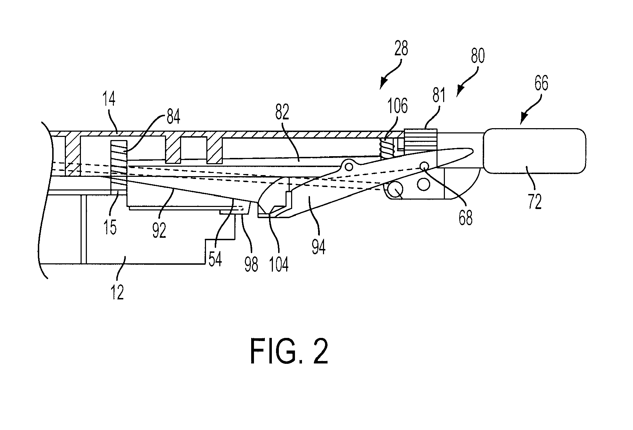

Detent spring 92 may be secured to table assembly 14 using a pair of bolts that extend through apertures formed in detent spring 92. Detent spring 92 may be a generally U-shaped spring which includes a formed detent 98 on the connecting leg of the U. Detent spring 92 is preferably normally positioned as shown in FIG. 2 with the shape of detent spring 92 being designed such that detent 98 biased into one of the detent slots 54 disposed on table assembly 14 or on a detent plate 53 attached to table assembly 14 to releasably position support table assembly 14 with respect to base assembly 12 at one of the more common miter angles defined by detent slots 54.

Detent override lever 94 is preferably pivotably secured to table 14. Lever 94 preferably has two outer ends extending towards handle 72. Preferably, handle 72 is positioned between the two ends of lever 94 as shown in FIGS. 1-3. The opposite of inner end of lever 94 preferably extends toward detent spring 92. The inner end of lever 94 is positioned under the outer end of detent spring 92 to enable lever 94 to move detent 98 out of engagement with the respective slot 54.

Detent spring 92 may include a pair of contoured tabs 104 which are cradled by the inner end of detent override lever 94. A biasing spring 106 preferably biases lever 94 in a clockwise direction, as shown in FIG. 2, such that the inner end of lever 94 maintains engagement with contoured tabs 104.

With such arrangement, when it is desired to reset support table assembly 14 to a new miter angle, handle 72 of miter locking mechanism 66 is first moved to its released position and one of the outer ends of lever 94 is pushed downward to pivot lever 94 in a clockwise direction. Table assembly 14 can now be rotated until the desired miter angle is reached. At this point, detent override lever 94 can be released causing detent 98 to engage another detent slot 54 if it is desired to select one of the more popular miter angles defined by detent slots 54. Handle 72 of miter locking mechanism 66 can then moved to its locked position to secure table assembly 14 with respect to base assembly 12.

When the desired miter angle is not one of the pre-selected miter angles defined by slots 54, the adjustment of table assembly 14 is similar but different to that described above. When it is desired to reset table assembly 14 to a new miter angle, handle 72 of miter locking mechanism 66 is first moved to its released position and one of the outer ends of lever 94 is pushed downward to pivot lever 94 in a clockwise direction. This clockwise rotation of lever 94 causes the inner end of lever 94 to lift detent spring 92 causing the disengagement of detent 98 with its respective slot. When the desired miter angle is reached, handle 72 of miter locking mechanism 66 is moved to its locked position to secure table assembly 14 with respect to base assembly 12. Once handle 72 has been locked, lever 94 can be released. The release of lever 94 allows detent spring 92 to engage the upper surface of detent plate 53 because detent 98 is not aligned with one of slots 54. By keeping pressure on miter detent override lever 94 while engaging handle 72, detent 98 is kept away from detent plate 53 and slots 54. This allows the setting of a miter angle near one of the slots 54 (i.e., 44.degree. instead of 45.degree.) without having the biasing load of detent spring 92 reacting against detent plate 53 to urge table assembly 14 to the desired angle.

Table assembly 14 may have a fine adjust mechanism for slightly changing the miter angle, i.e., the rotational position of table assembly 14 relative to base assembly 12. Such fine adjust mechanism preferably includes an elastic bumper 73 affixed to table assembly 14. Preferably bumper 73 is made of a relative soft elastic bumper mounted to table assembly 14. Bumper 73 may be attached, glued on, molded unto, overmolded on, inserted through table assembly 14.

Bumper 73 may also provide aesthetic variations to table assembly 14, such color breaks, shapes, etc. To these ends, bumper 73 may be shaped or colored in order to meet aesthetic requirements.

The bumper 73 is preferably disposed on the sides of table assembly 14 so that it can cushion an impact provided by the user to urge table assembly 14 to the desired angle. Persons skilled in the art will recognize that, providing an elastic bumper, may allow the user to hit the table assembly 14 with a substantial force, yet only move table assembly 14, because of the force being absorbed by bumper 73.

Any durometer of bumper 73 is contemplated. For example, the durometer may be between about 20 Shore O and about 80 Shore A. However, it is desired to provide the bumper 70 with characteristics that absorb and dampen some of the impact load and therefore a durometer of about 20 Shore A to about 75 Shore A is preferred. The durometer will be preferably dictated by the bumper thickness, the weight of table assembly 14, and the bumper contact area at the shock point.

Further information on bumper 73 and its characteristics may be found in US Published Application No. 20050058890, which is fully incorporated herein by reference.

Preferably, a motor 75 is disposed in base assembly 12 or table assembly 14. Motor 75 preferably carries an eccentric mass on its shaft can be turned on when finely adjusting the miter angle. Such motor 75 would create vibration, and separate base assembly 12 from table assembly 14, allowing for easier adjustment.

The user may also use another fine-adjust mechanism 80 provided on table assembly 14. Fine-adjust mechanism 80 preferably includes a knob 81, a shaft 82 attached to knob 81 for rotation therewith, and a pinion 84 fixedly attached to shaft 82 for rotation therewith. Accordingly, when knob 81 is rotated, pinion 84 rotates therewith.

Pinion 84 preferably meshes with an arcuate rack 15 disposed on base assembly 12. Accordingly, when knob 81 is rotated, the table assembly 14 rotates relative to base assembly 12. Persons skilled in the art will recognize that a number of intervening gears may be disposed between knob 81 and pinion 84 to increase the mechanical advantage, to decrease the rotational motion of pinion 84 relative to knob 81, to transmit motion around elements disposed on table assembly 14 and/or base assembly 12. Persons skilled in the art are referred to US Published Application No. 20050262984, which is fully incorporated herein by reference, for further information on such mechanism.

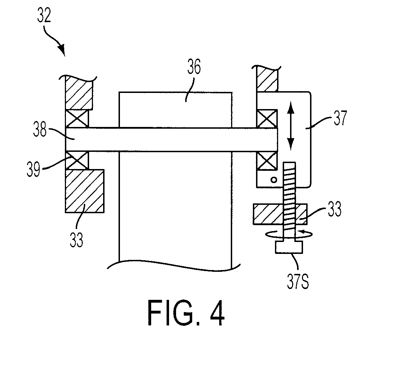

FIGS. 1 and 4 illustrate another miter angle fine-adjust mechanism. Support assembly 32 preferably has a trunnion 33 for pivotally supporting drive assembly 36. Drive assembly 36 is preferably disposed on pivot pin 38. One end of pivot pin 38 is preferably supported by trunnion 33. The other end is preferably supported by support 37, which is in turn supported by trunnion 33.

A screw 37S may threadingly engage and extend through trunnion 33 while being captured by support 37. Alternatively, screw 37S may extend through trunnion 33 without threadingly engaging trunnion 33, and threadingly engage support 37. With such arrangement, a user can rotate screw 37S, changing the angular relationship between the drive assembly 36 (and thus blade 18) and trunnion 33 (and thus table assembly 14).

Persons skilled in the art will recognize that pivot pin 38 is preferably supported by bearings 39, which may be disposed on trunnion 33, support 37 and/or drive assembly 36.

While embodiments of the invention have been illustrated and described, it is not intended that these embodiments illustrate and describe all possible forms of the invention. Rather, the words used in the specification are words of description rather than limitation, and it is understood that various changes may be made without departing from the spirit and scope of the invention.

## Claims

1. A miter saw comprising:
a base assembly;
a table assembly rotatably attached to the base assembly; and
a drive assembly pivotally attached to the table assembly, the drive assembly including a motor and a blade driven by the motor;
wherein the table assembly has at least one elastic bumper thereon.

2. The miter saw of Claim 1, further comprising a locking mechanism for locking a rotational position of the table assembly relative to the base assembly.

3. The miter saw of Claim 1, wherein the at least one elastic bumper is affixed to the table assembly.

4. The miter saw of Claim 1, wherein the at least one elastic bumper has a durometer of between about 20 Shore O and about 80 Shore A.

5. A miter saw comprising:
a base assembly;
a table assembly rotatably attached to the base assembly; and
a drive assembly pivotally attached to the table assembly, the drive assembly including a motor and a blade driven by the motor, the drive assembly being pivotable about a substantially horizontal chopping axis to move the drive assembly between an upper position away from the table assembly to a lower position towards the table assembly;
wherein the drive assembly is pivotable relative to the table assembly about a substantially vertical axis.

6. The miter saw of Claim 5, wherein the drive assembly is supported by a pivot pin.

7. The miter saw of Claim 6, wherein the pivot pin is movable.

8. The miter saw of Claim 6, wherein the pivot pin is movable via a screw.
